## Europäisches Patentamt
## European Patent Office
## Office européen des brevets

(11) Veröffentlichungsnummer: **0 288 893 B1**

(12) # EUROPÄISCHE PATENTSCHRIFT

(45) Veröffentlichungstag der Patentschrift: **25.09.91**

(51) Int. Cl.⁵: **C08G 69/28, C08G 69/36**

(21) Anmeldenummer: **88106343.2**

(22) Anmeldetag: **21.04.88**

(54) **Alpha-Amino-Epsilon-Caprolactam-modifizierte Polyamide aus Dicarbonsäuren/Diaminen.**

(30) Priorität: **01.05.87 DE 3714609**
**02.03.88 DE 3806632**

(43) Veröffentlichungstag der Anmeldung:
**02.11.88 Patentblatt 88/44**

(45) Bekanntmachung des Hinweises auf die
Patenterteilung:
**25.09.91 Patentblatt 91/39**

(84) Benannte Vertragsstaaten:
**DE FR GB IT NL**

(56) Entgegenhaltungen:
**DE-A- 1 770 754**

(73) Patentinhaber: **BAYER AG**

**W-5090 Leverkusen 1 Bayerwerk(DE)**

(72) Erfinder: **Meyer, Rolf-Volker, Dr.**
**Buchheimerstrase 23**
**W-4150 Krefeld(DE)**
Erfinder: **Dhein, Rolf, Dr.**
**Deswatinesstrasse 30**
**W-4150 Krefeld(DE)**
Erfinder: **Michael, Dietrich, Dr.**
**Deswatinesstrasse 57**
**W-4150 Krefeld(DE)**
Erfinder: **Bonten, Heinz**
**An der Heimstätte 23**
**W-4150 Krefeld(DE)**
Erfinder: **Heinz, Hans-Detlef, Dr.**
**Breslauer Strasse 31**
**W-4150 Krefeld 11(DE)**
Erfinder: **Müller, Peter-Rolf, Dr.**
**Paul-Klee-Strasse 76**
**W-5090 Leverkusen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 288 893 B1

## Beschreibung

Die Erfindung betrifft durch Polykondensation von polyamidbildenden, aliphatischen Diamin/Dicarbonsäure-Gemischen und/oder von polyamidbildenden Aminosäuren gegebenenfalls zusammen mit Lactamen, in Gegenwart kleiner Mengen von $\alpha$-Amino-$\epsilon$-caprolactam hergestellte, thermoplastisch verformbare, hochmolekulare, geringfügig verzweigte, aliphatische Polyamide, sowie gegebenenfalls ihre thermische Festphasen-Nachkondensation.

Polyamide sind eine seit vielen Jahren für eine Vielzahl praktischer Anwendungen bewährte Klasse von Polymeren, die nach verschiedenen Verfahren hergestellt werden können, die aus sehr unterschiedlichen Polyamid-bildenden Bausteinen synthetisiert werden können und die im speziellen Anwendungsfall allein oder auch in Kombination mit Verarbeitungshilfsmitteln, polymeren Legierungspartnern oder auch Verstärkungsmaterialien (wie z.B. mineralische Füllstoffe oder Glasfasern) zu Werkstoffen mit speziell eingestellten Eigenschaftskombinationen ausgerüstet werden können. So werden Polyamide in großen Mengen zur Herstellung von Fasern, Kunststoff-Formteilen und Folienm aber auch z.B. als Schmelzkleber und Hilfsmittel in einer Vielzahl von Anwendungen technisch verwendet.

Während Lactame kationisch, hydrolytisch (mit Wasserzusatz) oder auch anionisch zu Polyamiden umgewandelt werden können, kommt für die Polyamid-Herstellung aus polyamidbildenden Monomeren wie Diaminen, Dicarbonsäuren bzw. geeigneten Derivaten und Aminocarbonsäuren, auch in Kombination mit Lactamen, im wesentlichen nur die Polykondensations-Reaktion in Frage (s. Vieweg, Müller; Kunststoff-Handbuch, Bd. VI, S. 11 ff, Carl-Hanser-Verlag, Münschen 1966).

Zur Herstellung der Polyamide sind eine Vielzahl von Verfahrensweisen bekannt geworden, wobei je nach gewünschtem Endprodukt unterschiedliche Monomerbausteine zur Bestimmung der Matrix-Natur, verschiedene Kettenregler zur Einstellung eines angestrebten mittleren Molgewichts oder auch Monomere mit "reaktiven" Gruppen für später beabsichtigte Nachbehandlungen (z.B. Aminogruppen oder Sufonatgruppen zur besseren Anfärbbarkeit von Fasern mit sauren bzw. basischen Farbstoffen) eingesetzt werden.

Kontinuierliche Herstellungsverfahren sind ebenso bekannt wie die diskontinuierliche Produktion, z.B. in Autoklaven.

Bei allen Methoden zur Herstellung von (Co)Polyamiden durch Polykondensation bzw. durch hydrolytische Polymerisation der polyamidbildenden Diamin/Dicarbonsäure-Reaktionsgemische und/oder Aminosäuren gegebenenfalls in Kombination mit Lactamen, ist jedoch gemeinsam, daß ausgehend von geeigneten Monomermischungen die Herstellung der (Co)Polyamide mindestens 6-12 Stunden Polykondensationszeit in Anspruch nimmt, bis die Polyamide zum Abspinnen von Strängen aus der Polymerschmelze ausreichend hohe Molgewichte erreicht haben bzw. die Molgewichte für den geplanten Praxiseinsatz ausreichend hoch sind. Diese bedingt zwangsläufig - wegen der geringen Reaktionsgeschwindigkeit - relativ lange Nachkondensationszeiten bei relativ hohen Temperatuen, welche oft polymerschädigend (Verfärbung, oxidierend) sich auswirken.

Unabhängig von der langen Reaktionszeit ist in vielen Fällen noch eine Nachkondensation - z.B. in der Festphase - erforderlich, um noch höhere Molgewichte zu erzielen. Diese bedingt zwangsläufig - wegen der geringen Reaktionsgeschwindigkeit - relativ lange Nachkondensationszeiten bei relativ hohen Temperaturen, welche oft schädigend (Farbe, Oxidation) wirken.

Die zur Herstellung der (Co)Polyamide erforderlichen langen Reaktionszeiten begrenzen somit gravierend die Kapazität der Herstellanlagen und sind insbesondere, da die Reaktion bei Temperaturen von über $200\,^{\circ}$C, meist über $250\,^{\circ}$C, immer aber oberhalb des Schmelzpunktes des herzustellenden Produktes erfolgen muß, in hohem Maße energieverbrauchend und kostspielig.

Eine wesentliche Verkürzung der Reaktionszeiten bei der Herstellung von (Co)Polyamiden - ohne Verzicht auf die bekannten guten anwendungstechnischen Eigenschaften der Produkte - wäre somit als großer, insbesondere kosten-und energie-sparender Fortschritt anzusehen.

Überraschend wurde nun gefunden, daß die Polykondensationszeit und/oder Polykondensationstemperatur zur Herstellung von Co(Polyamiden) aus polyamidbildenden Diamin/Dicarbonsäure-Gemischen und/oder Aminosäuren, gegebenenfalls in Kombination mit Lactamen drastisch verkürzt werden kann, wenn man den polyamidbildenden Ausgangsmonomeren kleine Mengen von $\alpha$-Amino-$\epsilon$-caprolactam (ACL) zusetzt, wobei trotzdem Polyamide mit hohen Molekulargewichten (Lösungsviskositäten $\eta R \geq 2{,}8$, vorzugsweise $\geq 3{,}0$) erhalten werden.

Unabhängig von der eigentlichen Herstellung der Polyamide ist allerdings für viele Anwendungen, welche noch höhermolekulare Produkte erfordern, z.B. die Extrusion zu Folien oder Halbzeug, eine weitere Steigerung des Molekulargewichts erforderlich. Diese kann in den üblicherweise eingesetzten Polykondensationsanlagen, z.B. Autoklaven bei diskontinuierlicher Produktion oder VK-Rohren bzw. Rohrreaktoren bei kontinuierlicher Produktion, nur schlecht erfolgen, da die stark ansteigende Schmelzviskosität zu verschie-

2

denen Problemen führt. So wird die Temperaturführung sowie die Entfernung des Reaktionswassers immer schwieriger, und die große Reaktionszeit bei den notwendigen hohen Temperaturen führt in verstärktem Maß zu Nebenreaktionen und Gelteilchenbildung, die die Qualität des Endprodukts drastisch verschlechtern können. Auch das Abspinnen wird zunehmend schwieriger bei sehr hohen Schmelzviskositätswerten.

Hier bietet die Festphasennachkondensation entscheidende Vorteile. Aufgrund der weitaus geringeren Reaktionstemperaturen (ca. 180 - 220°C, je nach Polyamid, im Vergleich zu 250 bis 280°C bei der Schmelzekondensation) wird die Gefahr unerwünschter Nebenreaktionen und Vergelung reduziert; die Tatsache, daß es sich bei dem nachzukondensierenden Material um definierte Partikel mit vorhandenem Zwischenteilchenvolumen handelt, erleichtert zusammen mit der Variante, das Granulat kontinuierlich zu bewegen, z.B. in Taumeltrocknern, die Aufrechterhaltung einer gleichmäßigen Reaktionstemperatur sowie die Entfernung des Reaktionswassers. Da es sich um Partikel handelt, kommt es auch nicht zu Abspinnproblemen.

Das Festphasen-Nachkondensationsverfahren wird zwar industriell in großem Maße zur Herstellung höhermolekularer Polyamide eingesetzt, dennoch beinhaltet auch dieses Verfahren eine Reihe von Nachteilen, die ihre Ursache in der relativ niedrigen Nachkondensationsgeschwindigkeit haben. So erfordert das übliche Nachkondensationsverfahren immer noch einen hohen Zeit- und Energieaufwand. Aufgrund der beträchtlichen Verweilzeit bei Reaktionstemperatur ist das Verfahren außerdem in hohem Maße anlagenintensiv.

Es wäre somit als großer technologischer, insbesondere kostensparender Fortschritt anzusehen, wenn die Festphasennachkondensation von Polyamiden wesentlich beschleunigt und/oder bei tieferen Temperaturen durchgeführt werden könnte, ohne daß Nachteile bei den Polyamideigenschaften in Kauf genommen werden müßten.

Überaschend wurde nun gefunden, daß die erfindungsgemäßen α-Amino-ε-caprolactam (ACL)-enthaltenden Polyamide sich ungewöhnlich rasch selbst zu sehr hochmolekularen Produkten in der festen Phase nachkondensieren lassen, wobei gleichzeitig auch noch die Reaktionstemperatur gesenkt werden kann.

Dieser Effekt ist trotz der Tatsache, daß die eigentliche Schmelzepolykondensation durch ACL beschleunigt wird, unerwartet und nicht vorhersehbar gewesen, da bekanntlich die Schmelzepolykondensation und die Festphasennachkondensation ganz verschiedenen Gesetzmäßigkeiten und Mechanismen folgen (siehe z.B. R.J. Gaymans, J. Amirtharaj, H. Kamp, J. Appl. Polym. Sci. 27, 2513-2526 (1984); L.B. Sokolov; Solid Phase Polymerization, Syntheses by Polycondensation Publ. Israel Programm for Scientific Translation, 1968).

Weiterer Gegenstand der Erfindung sind daher hochmolekulare Polyamide mit verzweigter Struktur, die jedoch noch löslich sind, sowie ein Verfahren zu ihrer Herstellung, dadurch gekennzeichnet, daß sie durch Festphasennachkondensation der ACL-modifizierten Polyamide hergestellt werden.

Weiterhin wurde gefunden, daß hochmolekulare, wahrscheinlich verzweigte Polyamide mit deutlich erhöhter Schmelzviskosität gegenüber ACL-freien (Co)Polyamiden erhalten werden, wenn man eine Festphasen-Nachkondensation mit erheblicher Verkürzung der Reaktionszeit und Reaktionstemperatur gegenüber ACL-freien Polyamiden durchführt.

Gegenstand der Erfindung ist daher ein Verfahren zur Herstellung von (Co)Polyamiden aus polyamidbildenden, überwiegend aliphatischen Diaminen und Dicarbonsäuren oder deren Salzen und/oder Aminosäuren, gegebenenfalls in Kombination mit ω-Lactamen, dadurch gekennzeichnet, daß der zu polymerisierenden, polyamidbildenden Mischung 0,02-1 Gew.-%, vorzugsweise 0,05-0,6 %, besonders bevorzugt 0,1-0,3 Gew.-%, α-Amino-ε-caprolactam (im folgenden auch als ACL bezeichnet) zugesetzt werden und daß gegebenenfalls in der Festphase diese ACL-modifizierten (Co)Polyamide zu verzweigt aufgebauten, jedoch noch in m-Kresol löslichen (Co)Polyamiden mit erhöhter Viskosität und Schmelzviskosität nachkondensiert werden.

Gegenstand der Erfindung sind auch die so erhältlichen, ACL-modifizierten (Co)Polyamide bzw. in Festphase nachkondensierte hochmolekulare, verzweigt aufgebaute, aber noch in m-Kresol lösliche (Co)-Polyamide mit erhöhter Schmelzviskosität, sowie daraus hergestellte Formkörper.

Es sind viele Versuche beschrieben worden, durch Cokondensation mit basische Gruppen enthaltenden, polyamidbildenden Bausteinen basische Polyamide zu erhalten, die insbesondere bei Einsatz als Fasern mit sauren Farbstoffen leichter anfärbbar sind.

So wird in der DE-A 1 770 754 z.B. offenbart, daß mit einer Reihe von verschiedenen derarigen Zusatzstoffen eine verbesserte Anfärbbarkeit von Polyamidfasern und eine höhere Farbintensität erreichbar ist.

Als eines von mehreren Beispielen zu verwendender Zusatzstoffe wird dort auch ACL genannt, wobei das im aufgeführten Beispiel (VIII) beshriebene Polyamid-6, d.h. aus ε-Caprolactam, sich von den anderen nicht charakteristisch unterscheidet.

EP 0 288 893 B1

Ein Hinweis auf eine Reaktionszeit-verkürzende Eigenschaft des ACL fehlt völlig.

In der EP-A 0 013 553 wird beschrieben, daß ein Polymer aus ACL bisher nicht bekannt sei und es wird vermutet, daß wegen der Reaktionsmöglichkeiten der Aminogruppe während der Polykondensation Vernetzung resultieren müßte.

EP-A 0 013 553 beschreibt Polyamide aus, N,N-Dialkylsubstituierten α-Amino-ε-Caprolactam, die sich durch spezielle Löslichkeitseigenschaften und Anfärbbarkeit auszeichnen. Auch diese N,N-Dialkyl-substituierten Aminocaprolactam-Derivate zeigen als tert. Amin-Derivate keine Reaktionszeit-verkürzende Eigenschaften bei der Polykondensation der polyamidbildenden Diamin/Dicabronsäure-Gemische und/oder Aminosäuren, gegebenenfalls in Kombination mit Lactamen. Lactame werden bis zu 60 % und insbesondere vorzugsweise in weniger als der Hälfte der Gewichtsanteile an polyamidbildenden Komponenten mitverwendet.

Es war somit völlig unvorhersehbar und überraschend, daß die Maßnahme, ACL zum Reaktionsbeginn dem Monomeransatz zuzusetzen, zu einer drastischen Beschleunigung der Polyamidbildung führt.

Als polyamidbildende, aliphatische Dicarbonsäuren sind Dicarbonsäuren mit 6-36 C-Atomen vorzugsweise mit 6-12 C-Atomen, geeignet. Beispiele sind Adipinsäure, Pimelinsäure, Trimethyladipinsäure, Octandisäure, Azelainsäure, Sebacinsäure, Dodecandisäure, Heptadecandicarbonsäuren (-1,8 und -1,9-Gemisch), Dimerfettsäuren ($C_{36}$ hydriert und nicht hydriert); bevorzugt sind Adipinsäure, Azelainsäure, Dodecandisäure und Dimerfettsäuren. Es können anteilweise auch aromatische Dicarbonsäuren, wie Isophthalsäure oder Terephthalsäure mitverwendet werden.

Beispiele für aliphatische Diamine sind jene mit 4-12 C-Atomen, wie z.B. 1,4-Diaminobutan, Hexamethylendiamin, Octamethylendiamin, Trimethylhexamethylendiamine, Decamethylendiamin, Isophorondiamin, bevorzugt Hexamethylendiamin und Trimethylhexamethylendiamine.

Außer den genannten Dicarbonsäuren und Diaminen sind auch Dicarbonsäuren und Diamine geeignet, deren Alkylenketten Sauerstoffatome enthalten, so z.B. 1,8-Diamino-3,6-dioxaoctan, 1,11-Diamino-3,6,9-trioxaundecan, 3,6-Dioxa-heptansäure.

Beispiele für Aminosäuren sind jene mit mindestens 5-C-Atomen zwischen der Amino- und der Carboxylfunktion, vorzugsweise 6-Aminohexansäure, 11-Aminoundecansäure und 12-Aminododecansäure.

Die Diamin/Dicarbonsäure-Gemische können wahlweise jede Komponente für sich oder vorzugsweise, wie allgemein bekannt, aus Gründen einer sicheren Stöchiometrie als zuvor hergestellte Dicarbonsäure/Diamin-Salze (z.B. AH-Salz aus Adipinsäure und Hexamethylendiamin) eingesetzt werden.

Mitverwendung üblicher Kettenabbrecher, z.B. monofunktioneller Carbonsäuren oder Amine, z.B. Essigsäure, Hexansäure, Benzoesäure, Cyclohexancarbonsäure, Stearinsäure, Hexylamin bzw. Cyclohexylamin ist in üblichen Mengen möglich.

Als Lactame im Sinne der Erfindung sind ε-Caprolactam und Laurinlactam allein oder im Gemisch geeignet. Ganz bevorzugt wird ε-Caprolactam eingesetzt.

Es können auch jeweils Gemische der Diamine, Dicarbonsäuren, Aminocarbonsäuren oder Lactame eingesetzt werden.

α-Amino-ε-caprolactam (ACL) ist eine bekannte Verbindung und kann nach bekannten Verfahren hergestellt werden (CAS-Nr. 671/42/1).

Zur Beschleunigung der Polykondensation der polyamidbildenden Diamin/Dicarbonsäure-Gemische und/oder Amino-säuren, gegebenenfalls in Kombination mit Lactamen sind 0,02-1 Gew.-%, vorzugsweise 0,05-0,6 Gew.-% besonders bevorzugt 0,1-0,3 Gew.-% ACL erfindungsgemäß einzusetzen. Die Zugabe des ACL sollte in jedem Falle vorteilhaft vor oder zu Beginn der Reaktion erfolgen. Die Polykondensationszeit läßt sich dabei z.B. bei 270°C von ca. 6-10 h auf 0,2-3 Stunden, vorzugsweise 1-3 Stunden reduzieren, wobei der reaktionszeitverkürzende Effekt bei vorgegebener ACL-Konzentration umso größer ist, je geringer der gegebenenfalls vorhandene Anteil von Lactamen ist. Die Polykondensationszeit beträgt im erfindungsgemäßen Verfahren bei der jeweils gewählten Polykondensationstemperatur weniger als die Hälfte der bei herkömmlichen Verfahren üblichen Polykondensationszeit.

Eine zusätzliche Menge von 0, 83 Äquivalenten bis zu einer äquivalenten Menge an Carbonsäuregruppen pro α-Aminogruppe des ACL, in Form Dicarbonsäuren kann mitverwendet werden

Sie kann erheblich verkürzt sein, vorzugsweise z.B. auf 0,1 bis 3 Stunden, vorzugsweise 0,2 bis 3 Stunden, bei Temperaturen von > 200°C, vorzugsweise > 220°C und insbesondere von 220 bis 285°C. Dabei werden bei den jeweils höheren Temperaturen vorzugsweise die kürzeren Polykondensationszeiten angewandt.

Es ist in vielen Fällen auch möglich, die Reaktionsbeschleunigung durch PA-Synthese bei niedrigerer Schmelze-Temperatur zu nutzen. Dies kann durch verminderte thermische Belastung sich positiv auf Produkteigenschaften und Monomer/Dimer-Gehalte der Polyamide bei Lactam-Copolymeren auswirken.

Die entstehenden Polyamide haben im Vergleich zu bekannten Produkten bei vergleichbarer Lösungs-

4

viskosität ($\eta_{rel}$, 1 %ig in m-Kresol bei 25 °C) charakteristisch andere Schmelzviskositäten und zeigen eine ausgeprägte Strukturviskosität. Dies könnte auf eine etwas verzweigte Struktur hindeuten. Trotzdem sind diese Polyamide in ihren technologischen Eigenschaften im wesentlichen wie die üblichen technischen Polyamide einzusetzen, sind jedoch energiesparender herzustellen.

Die erfindungsgemäß hergestellten Polyamide können in bekannter Weise aus der Schmelze, vorzugsweise in ein Wasserbad, ausgetragen, gehäckselt, extrahiert und getrocknet werden.

Aus den Polyamiden können ebenso in bekannter Weise durch thermoplastische Verarbeitung Formkörper, Fasern und Folien mit verbesserten Eigenschaften hergestellt werden.

Gegebenenfalls können die so erhaltenen, ACL-modifizierten (Co)Polyamide in fester Phase bei Temperaturen unter deren Schmelzpunkt nachkondensiert werden, um das Molekulargewicht bei relativ niedrigen Reaktionstemperaturen zu erhöhen, wobei im allgemeinen auch eine deutliche Erhöhung der Schmelzviskosität eintritt.

Zur Herstellung dieser hochmolekularen, verzweigten Polyamide durch Festphasen-Nachkondensation können beliebige, durch Schmelzpolykondensation hergestellte, ACL-modifizierte (Co)Polyamide eingesetzt werden; besonders geeignet sind z.B. solche auf Basis von Polyamid 66, 610 und 6/66-(Co)Polyamiden.

Die Reaktionszeit in der festen Phase bis zum Erreichen einer gewünschten Schmelzviskosität ist gegenüber nicht ACL-modifizierten Polyamiden drastisch reduziert; die Nachkondensation kann auch bei deutlich tieferen Temperaturen durchgeführt werden.

Geeignete Reaktionstemperaturen für die Nachkondensation liegen im Bereich von 140 bis 240 °C, bevorzugt 150 bis 230 °C. Auf alle Fälle sollte die Reaktion mindestens 10 °C, bevorzugt mindestens 20 °C, unterhalb des Schmelzpunktes des jeweiligen Polyamids durchgeführt werden.

Die Kondensationszeit kann zwischen wenigen Minuten und ca. 30 Stunden, bevorzugt zwischen 0,5 und 20 Stunden, gewählt werden. Sie beträgt insbesondere 1 bis 15 Stunden. Die längeren Reaktionszeiten sind dabei besonders bei den niedrigeren Nachkondensationstemperaturen zu verwenden, die kürzeren Reaktionszeiten entsprechen vorzugsweise den höheren Nachkondensationstemperaturen.

Alle, üblicherweise für eine Festphasennachkondensation eingesetzten Vorrichtungen sind zur Herstellung der erfindungsgemäßen Polyamide geeignet. Bevorzugt werden bei diskontinuierlicher Arbeitsweise Taumeltrockner und Wendelmischer eingesetzt. Auch kontinuierliche Feststoff-Nachkondensationsverfahrensind zur Herstellung der erfindungsgemäßen Polyamide geeignet.

Die hochmolekularen, verzweigten Polyamide haben im Vergleich zu bekannten Vergleichsprodukten bei ähnlicher Lösungsviskosität ($\eta_{rel}$, 1 %ig in m-Kresol bei 25 °C) charakteristisch höhere Schmelzviskositätswerte und zeigen eine ausgeprägte Strukturviskosität.

Die hochmolekularen, verzweigten Polyamide sind geeignet für alls Anwendungen hochmolekularer Polyamide, insbesondere jedoch für die Extrusion zu Folien oder Halbzeug, oder auch zur Herstellung von Fasern und Borsten, oder als Basis zur Herstellung besonders schlagzäher, tieftemperaturfester Polyamid-Mischungen mit an sich bekannten Schlagzäh-Modifikatoren.

Die nachfolgenden Beispiele dienen zur Erläuterung der Erfindung ohne sie in irgendeiner Weise darauf einzuschränken.

Die Schmelzviskositätswerte wurden mit einem Contravis RM 300 Platte-Kegel-Viskosimeter bei den angegebenen Temperaturen gemessen.

Beispiel 1

80 g AH-Salz (äquimolares Salz aus Hexamethylendiamin und Adipinsäure) und 0,70 g einer 50 %igen wäßrigen Lösung von $\alpha$-Amino-$\epsilon$-caprolactam (ACL), entsprechend 0,5 Gew.-% ACL, bezogen auf Polyamid-66, wurden in einem 250 ml Rundkolben eingefüllt. Nach zweimaligem Evakuieren und Entspannen mit Stickstoff wurde unter Rühren und unter Stickstoff-Atmosphäre in ca. 15 Minuten auf 200 °C aufgeheizt und eine Stunde bei 200 °C vorkondensiert. Dann wird unter Rühren in ca. 15 Minuten auf ca. 270 °C erhitzt und 10 Minuten nach Erreichen von 270 °C die Reaktion abgebrochen. Man erhält ein Polyamid mit einer relativen Viskosität ($\eta_{rel}$, 1 %ig in m-Kresol bei 25 °C) von 3,0.

Beispiel 2

Analog Beispiel 1, aber mit zusätzlicher Zugabe von 0,20 g Adipinsäure zusammen mit der oben angegebenen Menge ACL, wird ein Polyamid-66 hergestellt. Das Produkt ist dem aus Beispiel 1 sehr ähnlich und hat eine relative Viskosität von 2,9.

Vergleichsversuch 1

Führt man die Reaktion analog Beispiel 1 durch, aber ohne Zugabe von ACL, so erhält man ein Polyamid mit sehr niedriger Schmelzviskosität (und einer relativen Viskosität von nur 1,8).

Beispiel 3

Beispiel 1 wird wiederholt, mit dem Unterschied, daß nur 0,40 g der ACL-Lösung (entspricht 0,3 Gew.-% ACL, bezogen auf AH-Salz) zugesetzt werden und die Kondensation 30 Minuten bei 270° C durchgeführt wird. Man erhält trotz der sehr kurzen Polykondensationszeit ein Produkt mit hoher Schmelzviskosität und einer relativen Viskosität von 2,8.

Beispiel 4

Gemäß Beispiel 1 wird ein Copolyamid aus 60 Gew.-Teilen ε-Caprolactam, 46,4 Gew.-Teilen AH-Salz und 1,2 g der 50 %igen wäßrigen Lösung von ACL (0,6 Gew.-%) zugesetzt. Nach 30 Minuten Polykondensationszeit bei 270° C erhält man ein 6/66-Copolyamid mit sehr hoher Schmelzviskosität. Nach Extraktion des Caprolactamgehaltes mit Wasser (8 % Extrakt) beträgt die relative Lösungsviskosität 4,5.

Beispiel 5

Gemäß Beispiel 1 bzw. 4 wird ein Copolyamid aus 20 Gew.-Teilen ε-Caprolactam und 93 Gew.-Teilen AH-Salz unter Zusatz von 1,2 g der 50 %igen wäßrigen Lösung von ACL (entspricht 0,6 Gew.-% ACL) hergestellt. Nach nur 30 Minuten Polykondensationszeit bei 270° C erhält man ein 6/66-Polyamid mit sehr hoher Schmelzviskosität. Die relative Viskosität des nicht extrahierten Polyamids beträgt dabei 4,0.

Beispiel 6

8,10 kg AH-Salz und 21,0 g einer 50 %igen wäßrigen Lösung von ACL (entspricht 0,15 Gew.-% ACL, bezogen auf Polyamid), werden in einen 25 l-Druckautoklaven eingewogen. Durch dreimaliges Aufdrücken von 3 bar Stickstoff und anschließendes Entspannen wurde eine Stickstoffatmosphäre im Autoklaven erreicht. Man heizt bei geschlossenem Reaktor unter Rühren zügig auf 200° C auf (ca. 1 Stunde) und rührt unter Eigendruck 1 Stunde bei 200° C weiter. Danach wird innerhalb von 3 Stunden langsam entspannt (Austrag des Reaktionswassers) und dann zügig unter Stickstoff auf 270° C innerhalb etwa einer Stunde aufgeheizt. Nach Erreichen einer Temperatur von 270° C wird die Reaktion sofort unterbrochen. Man läßt sofort absitzen und drückt das Polyamid mit Stickstoffüberdruck als Strang durch das Bodenventil in ein Wasserbad. Nach Granulierung erhält man ein Polyamid mit hoher Schmelzviskosität und einer relativen Viskosität von 3,2.

Beispiele 7 bis 10 und
Vergleichsbeispiel 2

In den Beispielen 7 bis 10 und Vergleichsversuch 2 werden analog Beispiel 1 aus den in Tabelle 1 beschriebenen Bausteinen Polyamide bzw. Copolyamide hergestellt.

6

## Tabelle 1

| Bsp. | Bausteine | ACL-Kon-zentra-tion | Polykon-densations-zeit($270^\circ$C) | $\eta_{rel.}$ (1%m-Kresol/ $25^\circ$C) |
|---|---|---|---|---|
| 7 | 80 Tl. AH-Salz<br>20 Tl. 6,9-Salz[1] | 0,5 % | 30 | 3,4 |
| 8 | 25 Tl. AH-Salz<br>75 Tl. 6,9-Salz[1] | 0,5 % | 30 | 3,1 |
| 9 | 100 Tl. 6,9-Salz[1] | 0,5 % | 30 | 3,3 |
| 10 | 100 Tl. 6,12-Salz[2] | 0,6 % | 60 | 3,6 |
| Vergl.-versuch 2 | " | – | 60 | 2,2 |

[1] Salz aus äquimolaren Teilen Hexamethylendiamin-1,6 und Azelainsäure

[2] Salz aus äquimolaren Teilen Hexamethylendiamin-1,6 und Dodecandisäure.

Auch diese Beispiele belegen den Reaktionszeit verkürzenden Einfluß von Aminocaprolactam (ACL).

Beispiel 11

Analog Beispiel 1 werden 77 g 11-Amino-undecansäure zusammen mit 0,42 g ACL und 0,20 g Adipinsäure eingewogen, wobei nach dem Vorkondensieren bei $200^\circ$C nur auf $220^\circ$C aufgeheizt wird und bei $220^\circ$C eine Stunde polykondensiert wird. Man erhält ein hochmolekulares Polyamid mit einer relativen Viskosität von 3,1.

Vergleichsversuch 3

Führt man Beispiel 11 nur mit 11-Amino-undecansäure, d.h. ohne die erfindungsgemäßen Zuschläge, durch, so erhält man unter den gleichen Bedingungen nur ein Polyamid mit sehr niedriger Schmelzviskosität und einer relativen Viskosität von nur 2,4.

**Patentansprüche**

**1.** Verfahren zur Herstellung von aliphatischen (Co-)-Polyamiden durch Polykondensation aus polyamidbildenden, aliphatischen Diaminen und Dicarbonsäuren bzw. deren Salzen und/oder polyamidbildenden Aminosäuren, gegebenenfalls auch in Kombination mit $\omega$-Lactamen, dadurch gekennzeichnet, daß der zu polymerisierenden polyamidbildenen Mischung vor oder zu Beginn der Polymerisation 0,02-1 Gew.-% $\alpha$-Amino-$\epsilon$-caprolactam (ACL) zugesetzt werden, daß als polyamidbildende $\omega$-Lactame bis zu 60 Gew.-% in der polyamidbildenden Mischung $\epsilon$-Caprolactam und/oder Laurinlactam eingesetzt werden und daß gegebenenfalls diese ACL-modifizierten (Co)-Polyamide zu verzweigt aufgebauten, jedoch noch immer in Kresol löslichen Polyamiden mit erhöhter Viskosität und Schmelzviskosität in der Festphase nachkondensiert werden.

2. Verfahren nach Anspruch 1, dadurch gekennzeichnet, daß man eine der α-Aminogruppen im α-Amino-ε-caprolactam mit einer zusätzlichen Menge von 0,83 Äquivalenten bis zu einer äquivalenten Menge an Carbonsäuregruppen pro α-Aminogruppe des ACL,in Form von Dicarbonsäuren, mitverwendet.

3. Verfahren nach Anspruch 1, dadurch gekennzeichnet, daß 0,1-0,6 Gew.% α-Amino-ε-caprolactam vor oder zu Beginn der Polykondensation der Monomermischungen zugesetzt werden.

4. Verfahren nach Ansprüchen 1 und 2, dadurch gekennzeichnet, daß als Diamine Hexamethylendiamin und Trimethylhexamethylendiamine für sich oder im Gemisch, als Dicarbonsäure Adipinsäure, Azelainsäure, Sebacinsäure und Dodecandisäure, allein oder im Gemisch, und als Aminosäuren 11-Aminoundecansäure und/oder 6-Aminohexansäure eingesetzt werden.

5. Verfahren nach Ansprüchen 1 bis 4, dadurch gekennzeichnet, daß eine Polykondensationszeit in der Schmleze von 0,1 bis 3 Stunden bei Polykondensationstemperaturen in der Schmelze von >200° bis 285°C eingehalten wird.

6. Verfahren nach Anspruch 6, dadurch gekennzeichnet, daß eine Polykondensationstemperatur in der Schmelze von 220° bis 285°C eingehalten wird.

7. Verfahren nach Ansprüchen 1 bis 6, dadurch gekennzeichnet, daß die Festphasen-Nachkondensation der ACL-modifizierten (Co)Polyamide bei einer Temperatur zwischen 140 und 240°C immer, jedoch mindestens 10°C unterhalb des Schmelzpunktes des jeweiligen Polyamids, in kontinuierlicher oder diskontinuierlicher Form durchgeführt wird und daß die Reaktionszeit im Bereich 0,5 bis 30 Stunden gewählt wird, wobei die höheren Reaktionszeiten besonders bei den niedrigen Reaktionstemperaturen benutzt werden.

8. Verfahren nach Anspruch 7, dadurch gekennzeichnet, daß die Festphasenkondensation bei einer Temperatur zwischen 140 und 240°C, immer jedoch mindestens 20°C unterhalb des Schmelzpunktes des jeweiligen Polyamids bei einer Reaktionszeit von 1-15 Stunden durchgeführt wird.

9. Verwendung von Polyamiden, erhalten nach Ansprüchen 1 bis 8, zur Herstellung von Formkörpern, Folien und Fasern.

## Claims

1. A process for the production of aliphatic (co)-polyamides by polycondensation of polyamide-forming aliphatic diamines and dicarboxylic acids or salts thereof and/or polyamide-forming amino acids, optionally in combination with ω-lactams, characterized in that 0.02 to 1% by weight α-amino-ε-caprolactam (ACL) is added to the polyamide-forming mixture to be polymerized before the beginning of polymerization, in that up to 60% by weight ε-caprolactam and/or lauric lactam is used as the polyamide-forming ω-lactam in the polyamide-forming mixture and in that these ACL-modified (co)-polyamides are optionally post-condensed in the solid phase to form branched, but still cresol-soluble polyamides showing increased viscosity and melt viscosity.

2. A process as claimed in claim 1, characterized in that one of the α-amino groups in the α-amino-ε-caprolactam is used with an additional quantity of 0.83 equivalent to an equivalent quantity of carboxylic acid groups per α-amino group of the ACL in the form of dicarboxylic acids.

3. A process as claimed in claim 1, characterized in that 0.1 to 0.6% by weight α-amino-ε-caprolactam is added to the monomer mixtures before or at the beginning of polycondensation.

4. A process as claimed in claims 1 and 2, characterized in that hexamethylene diamine and trimethyl hexamethylene diamines are used individually or in admixture as the diamines, adipic acid, azelaic acid, sebacic acid and dodecanedioic acid are used individually or in admixture as the dicarboxylic acids and 11-aminoundecanoic acid and/or 6-aminohexanoic acid is/are used as the amino acids.

5. A process as claimed in claims 1 to 4, characterized in that the melt polycondensation is carried out over a period of 0.1 to 3 hours at polycondensation temperatures in the melt of >200 to 285°C.

**EP 0 288 893 B1**

6. A process as claimed in claim 6, characterized in that the melt polycondensation is carried out at a temperature of 220 to 285° C.

7. A process as claimed in claims 1 to 6, characterized in that the solid-phase post-condensation of the ACL-modified (co)-polyamides is carried out continuously or discontinuously at a temperature of 140 to 240° C, but always at a temperature at least 10° C below the melting point of the particular polyamide and in that the reaction time is from 0.5 to 30 hours, the higher reaction times being used in particular at the low reaction temperatures.

8. A process as claimed in claim 7, characterized in that the solid-phase condensation is carried out over a period of 1 to 15 hours at a temperature of 140 to 240° C, but always at a temperature at least 20° C below the melting point of the particular polyamide.

9. The use of polyamides obtained in accordance with claims 1 to 8 for the production of mouldings, films and fibres.

**Revendications**

1. Procédé de production de (co)-polyamides aliphatiques par polycondensation à partir de diamines et d'acides dicarboxyliques aliphatiques générateurs de polyamides ou de leurs sels et/ou à partir d'amino-acides générateurs de polyamides, le cas échéant en association avec des ω-lactames, caractérisé en ce qu'on ajoute au mélange générateur de polyamides à polymériser avant la polymérisation ou au début de la polymérisation 0,02 à 1% en poids d'α-amino-ε-caprolactame (ACL), en ce qu'on utilise comme ω-lactames générateurs de polyamides jusqu'à 60% en poids, dans le mélange générateur de polyamides, d'ε-caprolactame et/ou de lauryl-lactame et en ce qu'on effectue le cas échéant la post-condensation en phase solide de ces (co)-polyamides modifiés par l'AGL en polyamides à structure ramifiée, mais toujours solubles dans le crésol, ayant une viscosité et une viscosité à l'état fondu élevées.

2. Procédé suivant la revendication 1, caractérisé en ce qu'on utilise l'un des groupes α-amino de l'α-amino-ε-caprolactame avec une quantité additionnelle allant de 0,83 équivalent à 1 équivalent de groupes acide carboxylique par groupe α-amino de l'ACL, sous forme d'acides dicarboxyliques.

3. Procédé suivant la revendication 1, caractérisé en ce qu'on ajoute 0,1 à 0,6% en poids d'α-amino-ε-caprolactame avant la polycondensation ou au début de la polycondensation des mélanges de monomères.

4. Procédé suivant les revendications 1 et 2, caractérisé en ce qu'on utilise comme diamines l'hexaméthylènediamine et des triméthylhexaméthylènediamines individuellement ou en mélange, comme acide dicarboxylique, l'acide adipique, l'acide azélaique, l'acide sébacique et l'acide dodécanedioïque, individuellement ou en mélange, et comme amino-acides l'acide 11-amino-undécanoïque et/ou l'acide 6-aminohexanoïque.

5. Procédé suivant les revendications 1 à 4, caractérisé en ce qu'on maintient un temps de polycondensation à l'état fondu de 0,1 à 3 heures, pour des températures de polycondensation de la masse en fusion allant de plus de 200° à 285° C.

6. Procédé suivant la revendication 5, caractérisé en ce qu'on maintient une température de polycondensation de la masse fondue de 220 à 285° C.

7. Procédé suivant les revendications 1 à 6, caractérisé en ce que la post-condensation en phase solide des (co)-polyamides modifiés par l'ACL est conduite à une température comprise entre 140 et 240° C, mais toujours inférieure à au moins 10° C au point de fusion du polyamide concerné, en continu ou en discontinu, et en ce que le temps de réaction est choisi dans la plage de 0,5 à 30 heures, les temps de réaction les plus longs étant utilisés en particulier aux basses températures de réaction.

8. Procédé suivant la revendication 7, caractérisé en ce que la condensation en phase solide est conduite à une température comprise entre 140 et 240° C, mais toujours inférieure d'au moins 20° C au point de

9

fusion du polyamide concerné, pour un temps de réaction de 1 à 15 heures.

9. Utilisation de polyamides, obtenus selon les revendications 1 à 8, pour la production de pièces moulées, de feuilles et de fibres.